# EUROPÄISCHE PATENTSCHRIFT

(11) **EP 1 717 599 B1**
(45) Veröffentlichungstag und Bekanntmachung des Hinweises auf die Patenterteilung: **29.08.2012**
(21) Anmeldenummer: 06007546.2
(22) Anmeldetag: 11.04.2006
(51) Int. Cl.: G01S 7/481, G02B 26/08, G01S 17/42, G01S 17/89

(54) **Vorrichtung zur Abbildung eines Blickfelds auf einen Detektor**
Device for reproducing a view field on a detector
Dispositif destiné à la visualisation d'un champ visuel sur un détecteur

(30) Priorität: 21.04.2005 DE 102005018482
(43) Veröffentlichungstag der Anmeldung: 02.11.2006
(73) Patentinhaber: Diehl BGT Defence GmbH & Co.KG, 88662 Überlingen (DE)
(72) Erfinder: Barenz, Joachim, Dr., DE-88662 Überlingen (DE); Baumann, Rainer, 88662 Überlingen (DE); Tholl, Hans Dieter, Dr., 88690 Uhldingen (DE)
(74) Vertreter: Diehl Patentabteilung

(56) Entgegenhaltungen:
- WO-A2-2004/083795
- US-A- 5 923 036
- US-A1- 2002 057 431
- US-A1- 2004 155 192
- Walter J. Bernard: "Technology demonstrator for ground-based surveillance and missile warning", Proceedings of SPIE, vol. 3436, 1 January 1998 (1998-01-01), pages 494-504, XP55021637, ISSN: 0277-786X, DOI: 10.1117/12.328048

## Beschreibung

Die Erfindung geht aus von einer Vorrichtung zur Abbildung eines Blickfelds auf einen Detektor mit einer eine Bildebene erzeugenden Optik und einem außerhalb der Bildebene angeordneten Detektor.

Zur Abbildung eines Blickfelds auf einen Detektor sind Optiken bekannt, die das zweidimensionale Blickfeld auf einen zweidimensionalen Detektor abbilden. Der Detektor ist mit einer Steuereinheit verbunden, die die Ausgabesignale der einzelnen M x N Detektorzellen des Detektors verarbeitet. Ist eine Verarbeitung aller Ausgabesignale der Detektorzellen mit einem hohen Rechenaufwand verbunden, so kann die Auswertung zu einer langen Rechenzeit oder - bei einer Ausstattung jeder Detektorzelle mit einer eigenen Auswerteeinheit - zu einer großvolumigen und teuren Steuereinheit führen.

Der Erfindung liegt die Aufgabe zugrunde, eine Vorrichtung zur Abbildung eines Blickfelds auf einen Detektor anzugeben, mit der das Blickfeld, auch bei einem eventuell hohen erforderlichen Rechenaufwand, effizient abtastbar ist.

Diese Aufgabe wird durch eine Vorrichtung der eingangs genannten Art gelöst, die erfindungsgemäß eine in der Bildebene angeordnete, schaltbare Pixelmatrix aufweist, durch die Strahlung aus dem Blickfeld schaltbar pixelweise dem Detektor zuführbar ist. Hierdurch können selektiv einzelne, jeweils einem Pixel der Pixelmatrix zugeordnete Ausschnitte des Blickfelds auf den Detektor abgebildet bzw. Strahlung aus diesen Ausschnitten in den Detektor gelenkt werden, wobei nicht interessierende Ausschnitte des Blickfelds ausgeblendet werden und somit keinen Rechenaufwand erfordern. Die Auswahl der Ausschnitte kann nach gerade günstigen Kriterien angepasst werden, beispielsweise an die Bewegung eines interessierenden Objekts im Blickfeld, wobei auch ein vollständiger Scan des gesamten Blickfelds möglich ist. Der Detektor kann klein und der Rechenaufwand gering gehalten werden, so dass eine klein bauende und technisch relativ unaufwendige Vorrichtung erreicht werden kann. Ein zusätzlicher Vorteil ergibt sich daraus, dass eine Pixelmatrix sehr stabil und mit einer hohen Vibrationsfestigkeit und Beschleunigungsfestigkeit hergestellt werden kann. Eine solche Lösung ist daher besonders geeignet für Fahrzeuge, insbesondere Luftfahrzeuge.

Der außerhalb der Bildebene angeordnete Detektor kann in einer weiteren Bildebene angeordnet sein, um - z.B. bei einem Mehrelementdetektor - eine scharfe Abbildung auf dem Detektor zu gewährleisten. Alternativ kann der Detektor in der Pupille einer Detektoroptik angeordnet sein, wodurch eine kompakte Vorrichtung erreichbar ist. Die Abbildung des Blickfelds auf dem Detektor muss keine scharfe Abbildung sein.

Die pixelweise Zuführung der Strahlung auf den Detektor bezieht sich auf die Pixel der Pixelmatrix. Die Pixelmatrix kann eine Matrix aus M x N Pixeln enthalten, die einzeln schaltbar sind in der Weise, dass ein Pixel jeweils lichtdurchlässig oder lichtundurchlässig geschaltet werden kann. Licht aus den den durchlässig geschalteten Pixeln zugeordneten Ausschnitten des Blickfelds kann die Pixelmatrix durchtreten und auf den Detektor fallen. In einer vorteilhaften alternativen Ausgestaltung ist die Pixelmatrix ein digitales Spiegelgitter. Ein Intensitätsverlust durch einen schlechten Transmissionskoeffizienten kann vermieden und eine hohe Empfindlichkeit der Vorrichtung kann erreicht werden. Das Spiegelgitter umfasst einzelne, matrixförmig angeordnete Spiegel, die einzeln durch eine Steuereinheit zwischen beispielsweise zwei Stellungen hin und her schaltbar sind. Hierbei sind die Stellungen zweckmäßigerweise so ausgewählt, dass bei einer ersten Stellung auf den Spiegel auftreffendes Licht jeweils auf den Detektor reflektiert wird - ggf. durch ein Objektiv - und in einer zweiten Stellung das Licht nicht auf den Detektor reflektiert wird. Die Matrix kann eine beliebige Anordnung haben, z.B. eine Gitteranordnung oder eine Wabenanordnung.

Die Anzahl der beweglichen Teile der Vorrichtung kann gering gehalten werden, wenn die Optik zur Abbildung des gesamten Blickfelds gleichzeitig auf den Detektor vorgesehen ist. Ohne eine Ausblendung durch die Pixelmatrix würde hierdurch das gesamte Blickfeld auf den Detektor abgebildet werden. Hierdurch kann aus dem Gesamtabbild des Blickfelds durch die Pixelmatrix selektiv ein Ausschnitt herausgegriffen werden, ohne dass es einer Blende oder eines blickfeldverschiebenden Elements bedarf.

Durch die Verwendung eines Einelementdetektors als Detektor kann der Rechenaufwand gering gehalten werden, was eine komplexe Signalerfassung und Signalauswertung der Signale des Detektors mit vertretbarem Aufwand ermöglicht. Hierdurch können Auswertungsverfahren angewandt werden, die bei einem Matrixdetektor nicht oder nur mit einem unverhältnismäßig hohen Aufwand möglich sind.

In einer vorteilhaften Ausführungsform umfasst die Vorrichtung ein Objektiv, das das Blickfeld telezentrisch in der Zwischenbildebene abbildet. Hierdurch kann einer Verzerrung des von der Pixelmatrix auf den Detektor geleiteten Bilds entgegenwirkt werden. Diese Ausgestaltung ist besonders vorteilhaft bei der Verwendung eines Mehrelementdetektors. Die Pixelelemente der Pixelmatrix, beispielsweise die Spiegel der Spiegelgitter, können in einer abbildenden Stellung parallel ausgerichtet sein, wodurch beispielsweise eine mit einem erheblichen Aufwand verbundene pixelweise Justierung der Pixelmatrix vermieden werden kann.

Strahlung aus den Ausschnitten des Blickfelds kann pixelweise durch eine entsprechende Schaltung der Pixelmatrix auf den Detektor geleitet werden. Alternativ umfasst die Vorrichtung eine Steuereinheit, die zur Schaltung der Pixelmatrix derart vorgesehen ist, dass ein Bereich aus mehreren, jeweils einem Pixel der Pixelmatrix zugeordneten Ausschnitten des Blickfelds gleichzeitig auf den Detektor abgebildet wird. Hierdurch kann, insbesondere bei Verwendung eines Einelementdetektors, das beim Detektor ankommende Signal verstärkt werden, wodurch eine hohe optische Reichweite der Vorrichtung erzielbar ist.

In einer weiteren Ausgestaltung der Erfindung wird vorgeschlagen, dass die Steuereinheit dazu vorgesehen ist, die Anzahl der Ausschnitte des Bereichs in Abhängigkeit einer Eigenschaft eines im Blickfeld gelegenen Objekts einzustellen. Ist das Objekt weit und das beim Detektor ankommende Signal schwach, kann ein großer Bereich gewählt werden. Außerdem kann eine Bildverarbeitung oder eine Entfernungsmessung gezielt auf einen Bereich und ein erkanntes Objekt reduziert werden, wodurch der notwendige Rechenaufwand gering gehalten werden kann. Dies ermöglicht eine schnelle Zielverfolgung oder die Anwendung einer komplexen Signalverarbeitung. Nicht interessierende Ausschnitte des Blickfelds können hierbei von einer Abtastung ausgeschlossen werden.

Vorteilhafterweise ist die Steuereinheit dazu vorgesehen, Strahlung aus mehreren, sich teilweise überdeckenden Bereichen zeitlich hintereinander auf den Detektor zu führen. Durch die Überdeckung der jeweils mehrere Ausschnitte des Blickfelds umfassenden Bereiche kann eine Gesamtauflösung erreicht werden, die feiner ist als die Größe der jeweiligen Bereiche. Durch das Zusammenfassen mehrerer Ausschnitte in jeweils den Bereichen kann ein hohes Signal-Rausch-Verhältnis und dadurch ein gutes Auswerteergebnis erzielt werden.

Zweckmäßigerweise ist die Steuereinheit dazu vorgesehen, aus einem Bereich eine ausschnittgroße Auflösung der Abbildung zu berechnen . Hierdurch kann eine Verbindung aus gutem Signal-Rausch-Verhältnis und hoher Auflösung erreicht werden, bei der die Ausschnitte einzeln aufgelöst sind.

Ein besonders gutes Signal-Rausch-Verhältnis kann erreicht werden, wenn die Ausschnitte in Form einer Hadamard-Matrix angeordnet sind. Hierdurch können viele Ausschnitte in einen Bereich zusammengefasst werden, wodurch ein hohes Signal-Rausch-Verhältnis erreichbar ist - bei trotzdem erhaltener ausschnittgroßer Auflösung der Abbildung.

Durch die Verwendung eines Mehrelementdetektors kann ein guter Kompromiss zwischen einer geringen Rechenleistung und einer schnellen und hoch aufgelösten Abbildung des Blickfelds erreicht werden. Eine einfache Optik zur Abbildung des gesamten Blickfelds gleichzeitig auf einen als Mehrelementdetektor ausgeführten Detektor kann erreicht werden, wenn der Detektor ein Zeilendetektor ist.

Die Erfindung eignet sich besonders zur Verwendung in einem Entfemungsmessgerät, das insbesondere zusätzlich zu den Koordinaten (dx, dy) oder (x, y) eines Bildpunkts eines Ausschnitts des Blickfelds den Abstand zu einem Objekt in dem Ausschnitt bzw. eine Tiefe (dr) oder (r) ermittelt. Nach der Aufnahme des gesamten Blickfelds ist hierdurch ein Datenvolumen aus Voxeln mit den Koordinaten (dx, dy, dr) oder (x, y, r) generierbar, wodurch eine Orientierung in einem Gelände oder eine Zielverfolgung besonders effektiv ermöglicht wird. Eine besonders effektive Entfernungsmessung kann durch die Verwendung eines Infrarotsenders, insbesondere eines Infrarotlasers zur Beleuchtung des Blickfelds, erreicht werden.

Eine geringe Anzahl von Detektorelementen des Detektors bei gleichzeitig hoher Anzahl von Ausschnitten des Blickfelds bzw. hoher Anzahl von Pixeln der Pixelmatrix erlaubt die Entfernungsmessung mit komplexer Signalauswertung und gutem Signal-Rausch-Verhältnis in einem großen Blickfeld. Ein Zeitnachteil gegenüber einem Matrixdetektor kann durch gezielte Auswahl von Ausschnitten zumindest teilweise kompensiert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Laserentfernungmessgeräts mit einem digitalen Spiegelgitter,
- Fig. 2: eine Darstellung eines Details des Laserentfernungmessgeräts,
- Fig. 3: eine schematische Ansicht eines aus mehreren Ausschnitten zusammengesetzten Blickfelds,
- Fig. 4: ein weiteres Blickfeld mit in Form einer Hadamard-Matrix angeordneten Ausschnitten und
- Fig. 5: eine schematische Ansicht einer weiteren Vorrichtung zur Abbildung eines Blickfelds auf einen Detektor mit einer Transmissionsmatrix.

### Beschreibung der Ausführungsbeispiele

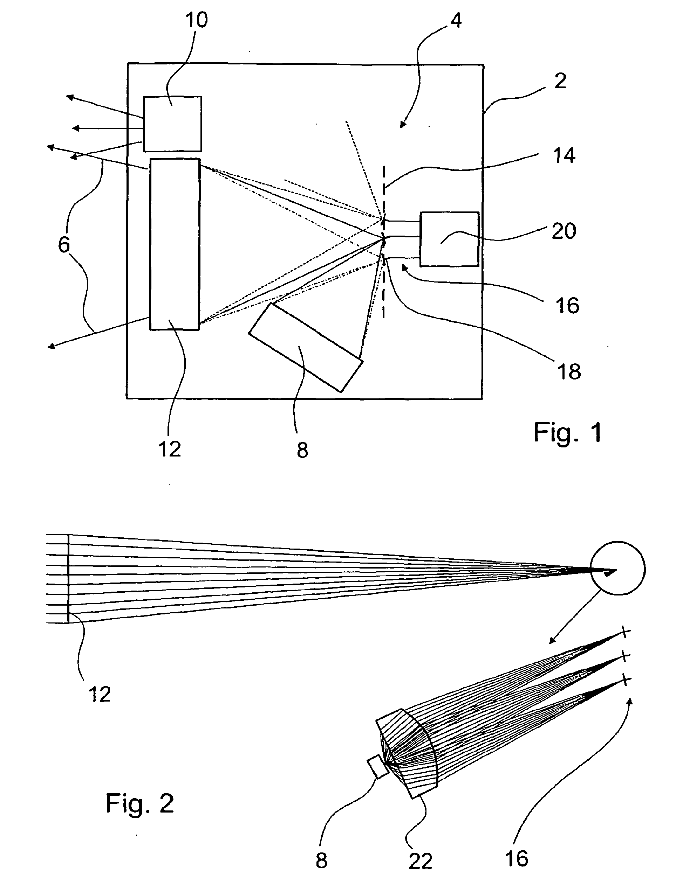

Figur 1 zeigt ein Entfernungsmessgerät 2 mit einer Vorrichtung 4 zur Abbildung eines Blickfelds 6 auf einen Detektor 8 mit einem Infrarotlaser 10 zur Abstrahlung von Infrarotstrahlung in das Blickfeld 6 und einer schematisch dargestellten Optik 12, die das Blickfeld 6 in einer Bildebene 14 abbildet. In der Bildebene 14 ist eine als digitales Spiegelgitter ausgeführte Pixelmatrix 16 angeordnet, von der der Übersichtlichkeit halber nur drei Spiegelelemente 18 dargestellt sind. Die Spiegelelemente 18 sind jeweils mit einer Steuereinheit 20 verbunden, die eine Bewegung der Spiegelelemente 18 zwischen zwei möglichen Stellungen steuert. In Figur 1 ist ein möglicher Zustand der Pixelmatrix 16 gezeigt, bei dem das als oberstes gezeichnete Spiegelelement 18 in einer "Aus-Stellung" gehalten ist. Derjenige Ausschnitt des Blickfelds 6, der auf diesem Spiegelelement 18 abgebildet und durch dieses Spiegelelement 18 gespiegelt wird, wird nicht auf den Detektor 8 gespiegelt, sondern in eine andere Richtung, so dass Licht aus diesem Ausschnitt des Blickfelds 6 nicht auf den Detektor 8 fällt. Die beiden unteren, in Figur 1 gezeigten Spiegelelemente 18 sind in ihrer "Ein-Stellung" und spiegeln jeweils den auf ihnen abgebildeten Ausschnitt des Blickfelds 6 auf den Detektor 8.

Der Detektor 8 ist ein Einelementdetektor, der nur ein einziges Detektorelement aufweist und somit nur in der Lage ist, jeweils ein Pixel auszugeben. Der Einelementdetektor ist als Avalanche-Diode ausgebildet, wobei auch eine PIN-Diode oder ein Photonenvervielfacher möglich sind.

Bei der in Figur 1 gezeigten Vorrichtung 4 werden die Ausschnitte des Blickfelds 6 von den Spiegelelementen 18 direkt in den Detektor 8 reflektiert. Hierfür ist ein relativ großer Detektor 8 notwendig. Bei der Zwischenschaltung eines Detektorobjektivs 22, wie in Figur 2 gezeigt, kann ein sehr kleiner Detektor 8 verwendet werden, der zweckmäßigerweise in der Pupille des Detektorobjektivs 16 angeordnet ist. Bei der in Figur 2 gezeigten Stellung der Spiegelelemente 18 der Pixelmatrix 16 reflektieren alle Spiegelelemente 18 in den Detektor 8, wodurch dort eine hohe Strahlungsintensität erreicht werden kann. Das gesamte Blickfeld 6 kann in dieser Stellung auf dem Detektor 8 abgebildet werden. Abgesehen davon, dass die Pixelmatrix 16 zum Ausblenden einzelner Ausschnitte vorgesehen ist, dient somit die Optik 12 in Verbindung mit dem Detektorobjektiv 22 zur Abbildung des gesamten Blickfelds 6 auf den Detektor 8.

Bei der in Figur 2 dargestellten wirklichkeitsgetreueren Anordnung von Optik 12, Spiegelgitter, Detektorobjektiv 22 und Detektor 8 ist der vergrößert dargestellte Teil der Vorrichtung 4 von der Pixelmatrix 16 bis zum Detektor 8 relativ weit weg von der Optik 12 angeordnet. Hierdurch werden die auf die Spiegelelemente 18 fallenden Strahlen fast rückwärts zum Detektorobjektiv 22 reflektiert und eine Winkelveränderung zwischen der "Ein-Stellung" und der "Aus-Stellung" der Spiegelelemente 18 ist sehr gering, wodurch sie sehr schnell bewegt werden können.

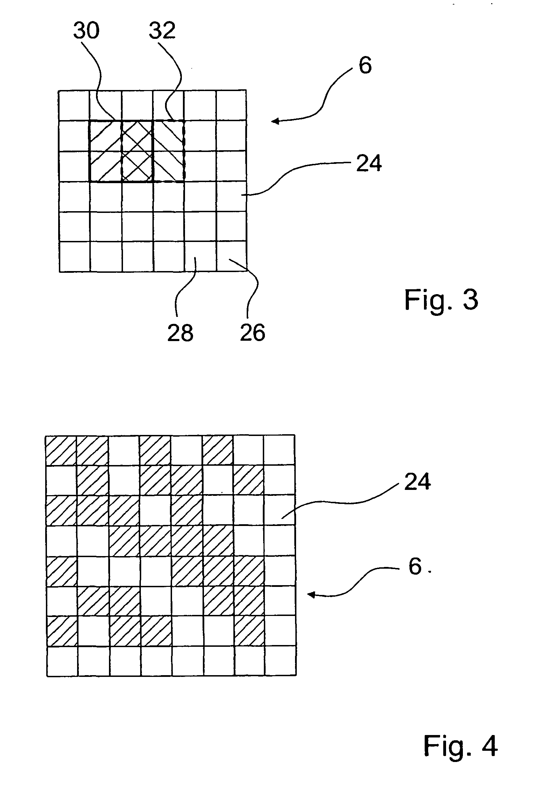

Figur 3 zeigt das Blickfeld 6 der Vorrichtung 4, unterteilt in 6 x 6 Ausschnitte 24, die jeweils auf einem Spiegelelement 18 der Pixelmatrix 16 abgebildet sind. Jeder Ausschnitt 24 stellt ein Pixel eines Gesamtbilds dar, das durch eine entsprechende sequenzielle Schaltung der Spiegelelemente 18 abbildbar und durch die Steuereinheit 20 zu einem Gesamtbild aus 6 x 6 Pixeln zusammensetzbar ist.

Zur Ermittlung von Entfernungsinformationen von Objekten im Blickfeld 6 kann die Pixelmatrix 16 in einem ersten Verfahren so geschaltet werden, dass nur ein einziges Spiegelelement 18 in seiner "Ein-Stellung" ist und nur Strahlung aus einem einzigen Ausschnitt 24 auf den Detektor 8 fällt. Von der Steuereinheit 20 wird nun ein Signal an den Infrarotlaser 10 ausgegeben, der ein Sendesignal in Form eines Pulszugs aus mehreren Lichtpulsen von Infrarotlicht in das Blickfeld 6 sendet. Dort wird das Infrarotlicht von einem Objekt reflektiert und trifft auf die Pixelmatrix 16, die jedoch nur das Infrarotlicht aus dem Ausschnitt 26 in den Detektor 8 reflektiert. Durch eine Laufzeitmessung wird der Abstand des im Ausschnitt angeordneten Objekts zur Vorrichtung 4 ermittelt. Außer der Laufzeit wird eine Pulsformanalyse durchgeführt, so dass die Tiefenausdehnung des Objekts ermittelt werden kann. Zusätzlich können Mehrfachreflexe, also mehrere hintereinander am Detektor 8 eintreffende Infrarotlichtpulse, erkannt werden, wodurch getarnte Objekte erfasst werden können, da der von der Tarnung reflektierte Anteil von dem vom Ziel reflektierten Anteil getrennt werden kann, da Tarnung und Ziel eine verschiedene Entfernung zur Vorrichtung 4 haben. Dadurch, dass der Detektor 8 ein Einelementdetektor ist und die Steuereinheit 20 nur Daten eines einzigen Pixels auswerten muss, geht die Auswertung der Daten sehr schnell und die Pixelmatrix 16 kann zügig in eine andere Stellung geschaltet werden. Nach einer Schaltzeit von etwa 10 µs sind die Spiegelelemente 18 der Pixelmatrix 16 derart angeordnet, dass nunmehr Strahlung aus einem Ausschnitt 28 in den Detektor 8 reflektiert wird. Nach einer erneuten Entfernungsmessung kann die Pixelmatrix 16 erneut umgeschaltet werden, und das ganze Blickfeld 6 aus 6 x 6 Ausschnitten 24 kann auf diese Weise Ausschnitt 24 für Ausschnitt 24 abgerastert werden. Nach 6 x 6 Aufnahmen wird von der Steuereinheit 20 ein Gesamtbild des Blickfelds 6 aus 6 x 6 Voxeln zusammengesetzt, denen eine räumliche Information (x, y) und eine Entfernungsinformation (r) zugeordnet ist, wobei die Entfernungsinformation (r) komplexe Informationen - wie oben beschrieben - umfasst.

Bei sehr weit entfernten Objekten reflektieren diese Objekte nur einen sehr geringen Strahlungsanteil des infraroten Sendesignals des Infrarotlasers 10. Zur Verbesserung des Signal-Rausch-Verhältnisses wird die Pixelmatrix 16 in einem zweiten Verfahren so geschaltet, dass zu einem ersten Zeitpunkt Strahlung aus einem Bereich 30 mit vier Ausschnitten 24 in den Detektor 8 reflektiert wird. Da der Detektor 8 ein Einelementdetektor ist, kann zwar der Bereich 30 nicht in 2 x 2 Ausschnitte aufgelöst werden, doch das den Detektor 8 erreichende Signal ist so groß, dass es sich deutlich vom Hintergrundrauschen unterscheidet und ausgewertet werden kann. Nach der erfolgten Entfernungsmessung wird die Pixelmatrix 16 so umgestellt, dass Strahlung aus einem zweiten Bereich 32, der wiederum aus 2 x 2 Ausschnitten besteht, auf den Detektor 8 gespiegelt wird. Auf diese Weise kann das gesamte Blickfeld 6 mit Bereichen 30, 32 abgerastert werden, wobei alle Bereiche 30, 32 im Blickfeld 6 - wie in Figur 3 gezeigt - überdeckend angeordnet sind. Hierdurch kann von der Steuereinheit 20 nach Abschluss des gesamten Scans die Auflösung des Entfernungsabbilds des Blickfelds 6 in Ausschnittgröße berechnet werden und - trotz des erhöhten Signal-Rausch-Verhältnisses - die gleiche optimale Auflösung wie im ersten Verfahren erzielt werden.

Die Steuereinheit 20 ist dazu vorgesehen, die Anzahl der Ausschnitte 24 der Bereiche 30, 32 in Abhängigkeit einer Eigenschaft eines im Blickfeld 6 erkannten Objekts einzustellen, beispielsweise auf eine Signalintensität. Wird nur ein geringes Signal von der Steuereinheit 20 erkannt, so werden die Bereiche 30, 32 größer geschaltet, so dass sie beispielsweise neun oder mehr Ausschnitte 24 umfassen. Außerdem ist die Steuereinheit 20 in der Lage, ein sich von einem Hintergrund abhebendes Objekt, beispielsweise ein Ziel, zu erkennen, z.B. durch die Auswertung der Entfernungsinformationen, und die Ausschnitte 24 bzw. Bereiche 30, 32 in Größe und Lage im Blickfeld 6 entsprechend dem Objekt anzupassen. Hierdurch kann eine gezielt auf das Objekt ausgerichtete Entfernungsinformation mit einem geringen Rechenaufwand ermöglicht werden.

In Figur 4 ist ein weiteres Blickfeld 6 aus 8 x 8 Ausschnitten 24 dargestellt, wobei die Pixelmatrix 16 in diesem Beispiel aus 8 x 8 Spiegelelementen 18 so geschaltet ist, dass 7 x 4 Spiegelelemente 18 jeweils den ihnen zugeordneten (schraffiert gezeichneten) Ausschnitt 24 in den Detektor 8 reflektieren. Diese Anordnung der Spiegelelemente 18 bzw. der Ausschnitte 24 entspricht einer aus der Mathematik bekannten Hadamard-Matrix. Diese zeichnet sich dadurch aus, dass in zwei benachbarten Zeilen oder Spalten die Hälfte der Ausschnitte 24 der zweiten Spalte in gleicher Stellung sind wie ihre benachbarten Ausschnitte 24 der ersten Spalte. Eine außen liegende L-förmige Anordnung von Ausschnitten 24 gleicher Schaltung - wie in Figur 4 gezeigt - kann hierbei von dieser Regel ausgenommen werden. Von dieser Art Schaltung sind N x N Anordnungen möglich, im Beispiel aus Figur 4 also 8 x 8 Hadamard-Matritzen, die sich jeweils durch nur sehr kleine Cluster von gleichgeschalteten Spiegelelementen 18 auszeichnen. Auf diese Weise kann aus einer Anzahl von Schaltungen bzw. Anordnungen der Spiegelelemente 18 optimal auf die Information eines einzigen Ausschnitts 24 zurückgerechnet werden, wodurch eine hohe Auflösung des Gesamtbilds erzielt werden kann.

Bei der in Figur 4 gezeigten Schaltung wird beispielsweise die Strahlung von 28 Ausschnitten auf den Detektor 8 vereinigt, wodurch sehr weit entfernte Objekte mit einem sehr kleinen Reflexionssignal erfasst werden können. Durch die Anordnung der Ausschnitte jeweils in Form einer Hadamard-Matrix lässt sich sehr schnell, spätestens nach 8 x 8 Abbildungen, ein Gesamtbild des Blickfelds 6 mit einer ausschnittgroßen Auflösung berechnen.

In einem weiteren Verfahren wird als Bereich jeweils eine Zeile von Ausschnitten 24 verwendet, und alle Zeilen des Blickfelds 6 werden abgerastert. Anschließend wird als Bereich eine Spalte von Ausschnitten 24 ausgewählt und erneut das gesamte Blickfeld 6 zeilenweise abgerastert. Hierdurch ist mit wenigen Messperioden eine hohe Auflösung des Blickfelds 6 verbunden mit einem guten Signal-Rausch-Verhältnis erzielbar.

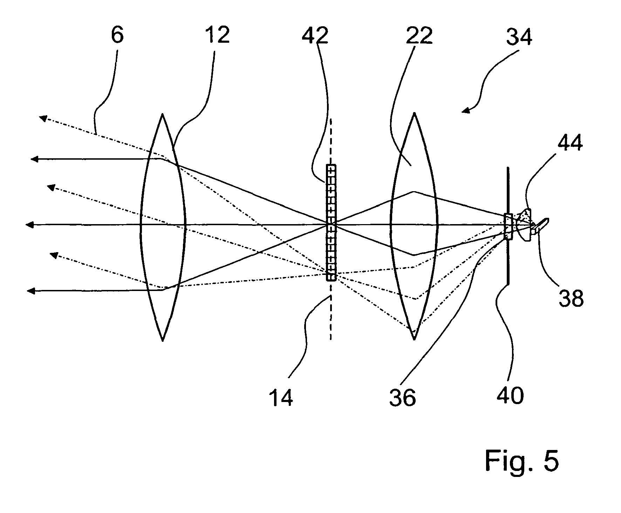

In Figur 5 ist eine weitere Vorrichtung 34 zur Abbildung des Blickfelds 6 auf einem Detektor 36 oder 38 dargestellt. Im Wesentlichen gleich bleibende Bauteile sind grundsätzlich mit den gleichen Bezugszeichen beziffert, wobei bzgl. gleich bleibender Merkmale und Funktionen auf die Beschreibung zu den Ausführungsbeispielen in den Figuren 1 bis 4 verwiesen wird. Die beiden Detektoren 36, 38 sind lediglich zur Verdeutlichung gemeinsam in Figur 5 gezeigt. Die Vorrichtung 34 umfasst sinnvollerweise nur einen der beiden Detektoren 36, 38. Der Detektor 36 ist ein Einelementdetektor, der in einer Pupille 40 des Detektorobjektivs 22, das Teil der Optik 12 ist, angeordnet ist. Der Detektor 36 fängt alle Strahlung auf, die ihm von einer Pixelmatrix 42 zugeleitet wird. Wie in Figur 5 zu sehen ist, bildet diese Strahlung kein scharfes Abbild des Blickfelds 6, was jedoch ohne Bedeutung ist, da der Detektor 36 ein Einelementdetektor ist.

Der Detektor 38 ist ein Zeilendetektor, dem ein zusätzliches Objektiv 44 zugeordnet ist. Das Objektiv 44 bildet das gesamte Blickfeld 6 auf den Detektor 38 ab, wobei jedes der beispielsweise 32 Detektorelemente des Detektors 38 Strahlung aus einer ganzen Spalte der Pixelmatrix 42 erhält, die beispielsweise aus 32 x 32 Matrixelementen besteht. Hierdurch kann durch eine zeilenweise Schaltung der Pixelmatrix 42 das gesamte Blickfeld 6 in beispielsweise 32 Zeilenbildern zu einem Gesamtbild des Blickfelds 6 zusammengesetzt werden. Wie oben beschrieben, ist auch eine Zusammenschaltung von mehreren Zeilen zu einem Zeilenbereich möglich, um das Signal-Rausch-Verhältnis eines jedem Detektorelements des Detektors 38 zu verbessern.

Im Gegensatz zur Pixelmatrix 16 ist die Pixelmatrix 42 als eine Transmissionsmatrix ausgestaltet, die Strahlung aus dem Blickfeld 6 pixelweise entweder transmittiert und somit zu einem der Detektoren 36, 38 durchlässt oder die Strahlung reflektiert bzw. teilweise absorbiert. Die "Ein-Schaltung" der Matrixelemente der Pixelmatrix 42 besteht somit in einem transmittierenden Zustand und die "AusSchaltung" in einem reflektierenden oder absorbierenden Zustand. Es ist anstelle der Pixelmatrix 42 jedoch ebenso gut eine spiegelnde Pixelmatrix 16 einsetzbar.

### Bezugszeichen

- 2: Entfernungsmessgerät
- 4: Vorrichtung
- 6: Blickfeld
- 8: Detektor
- 10: Infrarotlaser
- 12: Optik
- 14: Bildebene
- 16: Pixelmatrix
- 18: Spiegelelement
- 20: Steuereinheit
- 22: Detektorobjektiv

- 24: Ausschnitt
- 26: Ausschnitt
- 28: Ausschnitt
- 30: Bereich
- 32: Bereich
- 34: Vorrichtung
- 36: Detektor
- 38: Detektor
- 40: Pupille
- 42: Pixelmatrix
- 44: Objektiv

## Patentansprüche

1. Entfernungsmessgerät (2) mit einer Vorrichtung (4) zur Abbildung eines Blickfelds (6) auf einen Detektor (8, 36, 38) mit einer eine Bildebene (14) erzeugenden Optik (12) und einem außerhalb der Bildebene (14) angeordneten Detektor (8, 36, 38), wobei in der Bildebene (14) eine derart schaltbare Pixelmatrix (16, 42) angeordnet ist, mit welcher zur Ermittlung von Entfernungsinformationen von Objekten im Blickfold (6) mitels Laufzeit messung selektiv einzelne Pixel (18) der Pixelmatrix (16, 42) entweder in einen Zustand schaltbar sind, in welchem Strahlung aus einem, dem einzelnen Pixel (18) zugeordneten Ausschnitt (24) des Blickfelds (6) auf den Detektor (8, 36, 38) fällt, oder in einen Zustand schaltbar sind, in welchem keine Strahlung aus diesem Ausschnitt (24) des Blickfelds (6) auf den Detektor (8, 36, 38) fällt.

2. Entfernungsmessgerät (2) nach Anspruch 1, wobei die Pixelmatrix (16) ein digitales Spiegelgitter ist.

3. Entfernungsmessgerät (2) nach Anspruch 1 oder 2, wobei die Optik (12) zur Abbildung des gesamten Blickfelds (6) gleichzeitig auf den Detektor (8, 36, 38) vorgesehen ist.

4. Entfernungsmessgerät (2) nach einem der vorhergehenden Ansprüche, wobei der Detektor (8, 36) ein Einelementdetektor ist.

5. Enttemungsmessgerät (2) nach einem der Ansprüche 1 - 3 , wobei der Detektor (38) ein Zeilendetektor ist.

6. Entfernungsmessgerät (4) nach einem der vorhergehenden Ansprüche mit einem Objektiv, das das Blickfeld (6) telezentrisch in der Bildebene (14) abbildet.

7. Entfernungsmessgerät (2) nach einem der vorhergehenden Ansprüche mit einer Steuereinheit (20), die zur Schaltung der Pixelmatrix (16) derart vorgesehen ist, dass ein Bereich (30, 32) aus mehreren, jeweils einem Pixel der Pixelmatrix (16) zugeordneten Ausschnitten (24) des Blickfelds (6) gleichzeitig auf dem Detektor (8, 36, 38) abgebildet wird.

8. Entferungsmessgerät (2) nach Anspruch 7, wobei die Steuereinheit (20) dazu vorgesehen ist, die Anzahl der Ausschnitte (24) des Bereichs (30, 32) in Abhängigkeit einer Eigenschaft eines im Blickfeld (6) gelegenen Objekts einzustellen.

9. Entfernungsmessgerät (2) nach Anspruch 7 oder 8, wobei die Steuereinheit (20) dazu vorgesehen ist, Strahlung aus mehreren, sich teilweise überdeckenden Bereichen (30, 32) zeitlich hintereinander auf den Detektor (8, 36, 38) zu führen.

10. Entfernungsmessgerät (2) nach einem der Ansprüche 7 bis 9, wobei die Steuereinheit (20) dazu vorgesehen ist, aus einem Bereich (30, 32) eine ausschnittgroße Auflösung der Abbildung zu berechnen.

11. Entfernungsmessgerät (2) nach einem der Ansprüche 7 bis 10, wobei die Ausschnitte (24) in Form einer Hadamard-Matrix angeordnet sind.

12. Entfernungsmessgerät nach einem der Ansprüche 1 - 11, mit einem Infrarotsender, insbesondere einem Infrarotlaser (10), zur Beleuchtung des Blickfelds (6).

## Claims

1. Distance-measuring unit (2) having a device (4) for imaging a field of view (6) on a detector (8, 36, 38), comprising an optics (12) producing an image plane (14), and a detector (8, 36, 38) arranged outside the image plane (14), there being arranged in the image plane (14) a switchable pixel matrix (16, 42) by means of which, in order to determine distance information of objects in the field of view (6) by means of time-of-flight measurement, individual pixels (18) of the pixel matrix (16, 42) can be selectively switched either into a state in which radiation falls from a section (24), assigned to the individual pixel (18), of the field of view (6) onto the detector (8, 36, 38), or can be selectively switched into a state in which no radiation falls onto the detector (8, 36, 38) from this section (24) of the image field (6).

2. Distance-measuring unit (2) according to Claim 1, in which the pixel matrix (16) is a digital reflection grating.

3. Distance-measuring unit (2) according to Claim 1 or 2, in which the optics (12) is provided for imaging the entire field of view (6) simultaneously onto the detector (8, 36, 38).

4. Distance-measuring unit (2) according to one of the preceding claims, in which the detector (8, 36) is a single-element detector.

5. Distance-measuring unit (2) according to one of Claims 1-3, in which the detector (38) is a line detector.

6. Distance-measuring unit (2) according to one of the preceding claims, having an objective which images the field of view (6) telecentrically in the image plane (14).

7. Distance-measuring unit (2) according to one of the preceding claims, having a control unit (20) which is provided to switch the pixel matrix (16) in such a way that a region (30, 32) composed of a plurality of sections (24), respectively assigned to a pixel of the pixel matrix (16), of the field of view (6) is simultaneously imaged on the detector (8, 36, 38).

8. Distance-measuring unit (2) according to Claim 7, in which the control unit (20) is provided in order to set the number of the sections (24) of the region (30, 32) as a function of a property of an object situated in the field of view (6).

9. Distance-measuring unit (2) according to Claim 7 or 8, in which the control unit (20) is provided in order to guide radiation in temporal succession onto the detector (8, 36, 38) from a plurality of partially overlapping regions (30, 32).

10. Distance-measuring unit (2) according to one of Claims 7 to 9, in which the control unit (20) is provided in order to calculate a section-large resolution of the imaging from a region (30, 32).

11. Distance-measuring unit (2) according to one of Claims 7 to 10, in which the sections (24) are arranged in the form of a Hadamard matrix.

12. Distance-measuring unit according to one of Claims 1-11, having an infrared transmitter, in particular an infrared laser (10), for illuminating the image field (6).

## Revendications

1. Appareil de mesure de distance (2) comprenant un dispositif (4) destiné à former l'image d'un champ de vue (6) sur un détecteur (8, 36, 38) comportant une optique (12) générant un plan image (14) et un détecteur (8, 36, 38) disposé à l'extérieur du plan image (14), dans lequel une matrice de pixels (16, 42) pouvant être commutée est disposée dans le plan image (14), au moyen de celle-ci, pour obtenir des informations de distance d'objets se trouvant dans le champ de vue (6) par mesure du temps de parcours, des pixels individuels (18) de la matrice de pixels (16, 42) sont sélectivement commutables soit dans un état dans lequel le rayonnement provenant d'une ouverture (24) du champ de vue (6) est incident sur le détecteur (8, 36, 38), soit dans un état dans lequel aucun rayonnement n'est incident sur le détecteur (8, 36, 38) en provenance de ladite ouverture (24) du champ de vue (6).

2. Appareil de mesure de distance (2) selon la revendication 1, dans lequel la matrice de pixels (18) est un réseau numérique de miroirs.

3. Appareil de mesure de distance (2) selon la revendication 1 ou 2, dans lequel l'optique (12) est conçue pour former simultanément l'image de la totalité du champ de vue (6) sur le détecteur (8, 36, 38).

4. Appareil de mesure de distance (2) selon l'une quelconque des revendications précédentes, dans lequel le détecteur (8, 36) est un détecteur à un élément.

5. Appareil de mesure de distance (2) selon l'une quelconque des revendications 1 à 3, dans lequel le détecteur (38) est un détecteur de lignes.

6. Appareil de mesure de distance (2) selon l'une quelconque des revendications précédentes, comprenant un objectif qui forme l'image du champ de vue (6) de manière télécentrique dans le plan image (14).

7. Appareil de mesure de distance (2) selon l'une quelconque des revendications précédentes, comprenant une unité de commande (20) qui est conçue pour commuter la matrice de pixels (16) de manière à former simultanément sur le détecteur (8, 36, 38) l'image d'une région (30, 32) constituée d'une pluralité d'ouvertures (24) du champ de vue (6) respectivement associées à un pixel de la matrice de pixels (16).

8. Appareil de mesure de distance (2) selon la revendication 7, dans lequel l'unité de commande (20) est conçue pour régler le nombre des ouvertures (24) de la région (30, 32) en fonction d'une propriété d'un objet situé dans le champ de vue (6).

9. Appareil de mesure de distance (2) selon la revendication 7 ou 8, dans lequel l'unité de commande (20) est conçue pour guider séquentiellement dans le temps vers le détecteur (8, 36, 38) le rayonnement provenant d'une pluralité de régions (30, 32) se chevauchant partiellement.

10. Appareil de mesure de distance (2) selon l'une quelconque des revendications 7 à 9, dans lequel l'unité de commande (20) est conçue pour calculer à partir d'une région (30, 32) une résolution de l'image formée ayant la dimension de l'ouverture.

11. Appareil de mesure de distance (2) selon l'une quelconque des revendications 7 à 10, dans lequel les ouvertures (24) sont agencées sous la forme d'une matrice de Hadamard.

12. Appareil de mesure de distance selon l'une quelconque des revendications 1 à 11, comprenant un émetteur infrarouge, notamment un laser infrarouge (10), destiné à éclairer le champ de vue (6).
